# DEMANDE DE BREVET EUROPEEN

(11) **EP 2 204 749 A1**
(43) Date de publication de la demande: **07.07.2010**
(21) Numéro de dépôt: 10003146.7
(22) Date de dépôt: 29.12.2000
(51) Int. Cl.: G06F 17/30

(54) **Procédé et dispositif pour accéder à des sources d'information et services sur le web**

(30) Priorité: 30.12.1999 FR 9916704
(62) Demande divisionnaire de: 00991296.5
(71) Demandeur: Allani, Férid, Kelibia (TN)
(72) Inventeur: Allani, Férid, Kelibia (TN)
(74) Mandataire: Zeitoun Kernevez, Catherine

(57) **Abrégé**

Procédé pour accéder à des sources d'information et à des services sur le Web, à partir d'un dispositif de communication connecté via un réseau de communication au réseau Internet. Ce procédé comprend :
- une ou plusieurs étapes de visualisation d'une page de sélection parmi une pluralité de pages de sélection organisées en arborescence et préalablement stockées localement, chaque page de sélection comprenant un ensemble d'icônes comportant un ou plusieurs icônes d'accès direct à des sources d'information distantes et un ou plusieurs icônes de sélection pour accéder à une autre page de sélection, et
- une étape pour émettre, en réponse à une sélection d'une icône d'accès direct dans une page de sélection en cours de visualisation, l'adresse de la source d'information correspondant à cette icône.

Utilisation notamment pour des appareils de communication mobile.

## Description

### DESCRIPTION

La présente invention concerne un procédé pour accéder à des sources d'information et à des services sur le Web. Elle vise également un dispositif pour la mise en oeuvre de ce procédé.

L'utilisation d'Internet et du Web pour accéder à des informations et des services de toute nature connaît actuellement un développement considérable. Pour permettre d'accéder aux sites Web proposant ces informations et ces services, des logiciels de navigation tels qu'Internet Explorer^{™} ou Navigator^{™} ont été largement diffusés et équipent désormais tous les ordinateurs personnels et postes de travail connectés à Internet. Ces logiciels de navigation permettent d'accéder à des sites fournissant des moteurs de recherche tels que Yahoo!^{™} ou voila^{™} permettant d'émettre des requêtes en langage naturel et de recevoir en retour un ensemble de sites classés par ordre de pertinence décroissant. Par ailleurs, se développent actuellement des sites « portail », à vocation généraliste ou spécialisée, dont la fonction est de proposer à l'utilisateur d'une part des accès directs à certains sites présélectionnés et d'autre part des accès à des rubriques. Les choix de site ou de rubrique sont représentés soit par une désignation soit par une icône ou une image fixe ou animée. Un pointage et un cliquage au moyen d'une souris sur la zone active correspondante provoque la génération par le logiciel de navigation d'une adresse Web sur Internet permettant d'accéder à un site sélectionné, et au sein de ce site, à un document ou à un ensemble de documents recherchés. En fait, en réponse à une telle requête, le poste requérant peut recevoir soit directement un document, soit le plus souvent une nouvelle page HTML contenant elle-même un nombre plus ou moins élevé de liens parmi lesquels l'utilisateur devra encore effectuer un nouveau choix.

Or, à chaque étape requête-réponse correspond un délai de durée de variable conditionnée par des paramètres non maîtrisables tels que le trafic sur le réseau, l'encombrement et la puissance des serveurs des sites consultés ou encore la taille mémoire des pages reçues. Il en résulte un réel inconfort ressenti par de nombreux internautes, pouvant aller jusqu'à en dissuader certains de se lancer dans une recherche d'informations qui pourrait s'avérer longue, fastidieuse, et aléatoire.

De plus, outre le problème précité de temps de réponse et de durée de la recherche, se pose également la question de fournir à des utilisateurs non familiarisés avec les outils informatiques et Internet un accès rapide et aisé à des sources d'information et à des services, ce que les portails généralistes actuellement disponibles sur le Web ne fournissent pas de façon satisfaisante.

Le document EP0846019 divulgue un procédé pour sélectionner un item d'information dans un système de traitement d'information, dans lequel on fournit à un utilisateur un accès à deux items d'information à travers respectivement deux structures de menu hiérarchiques multi-niveaux. La seconde structure de menu comprend au moins les sous-menus fournis dans la première structure de menu et le second sous-ensemble inclut au moins les items d'information inclus dans le premier sous-ensemble. Un utilisateur quittant la première structure de menu dans un sous-menu particulier entre dans la seconde structure de menu dans un sous-menu qui correspond à ce sous-menu particulier.

Le but de l'invention est de proposer un procédé pour accéder à des sources d'information et à des services sur le Web, qui soit plus rapide et d'utilisation plus aisée que les procédés actuels d'accès aux information sur Internet, notamment dans un objectif d'intégration dans des bornes interactives et des appareils de communication et de bureautique.

Cet objectif est atteint avec un procédé pour accéder à des sources d'information et à des services sur le Web, à partir d'un dispositif de communication connecté via un réseau de communication au réseau Internet, comprenant :
- une ou plusieurs étapes de visualisation d'une page de sélection parmi une pluralité de pages de sélection organisées au sein d'une structure de menu en arborescence et préalablement stockées localement au sein dudit dispositif de communication, chaque page de sélection comprenant un ensemble d'icônes et,
- une étape pour émettre sur le réseau de communication, en réponse à une sélection d'une icône dans une page de sélection en cours de visualisation, l'adresse d'une source d'information correspondant à ladite icône sélectionnée.

Suivant l'invention, pour chaque page de sélection, l'ensemble d'icônes comporte une ou plusieurs icônes d'accès direct à des sources distantes d'information et/ou une ou plusieurs icônes de sélection pour accéder localement à une autre page de sélection au sein de la ladite structure de menu en arborescence,
lesdites adresses de sources d'information correspondant à des icônes d'accès direct étant préalablement stockées localement dans une table ou base d'adresses ou générées localement au fur et à mesure des étapes de visualisation et de sélection.

Ainsi, en procédant localement à des étapes préliminaires de sélection dans des pages organisées de manière arborescente et opérant comme des menus déroulants, et en n'émettant finalement sur Internet qu'une adresse complète d'accès à une source d'informations bien ciblée, on réduit de manière significative le temps moyen observé pour accéder à des informations recherchées. Par ailleurs, ce procédé offre aux utilisateurs peu familiarisés avec les outils informatiques et a fortiori avec les outils de navigation et les moteurs de recherche un guidage efficace vers la plupart des sources d'information utiles ou les plus fréquemment consultées.

Ces icônes d'accès direct peuvent avantageusement comprendre des icônes d'accès à des sites marchands. Cette caractéristique ouvre par exemple la voie à une personnalisation aux couleurs d'un groupe commercial, de l'outil d'accès obtenu par implémentation du procédé selon l'invention. Ces icônes d'accès direct à un site marchand ou institutionnel peuvent reproduire le logotype de ce site.

Les icônes de sélection incluent de préférence un item ou intitulé thématique ouvrant l'accès à une page dédiée à une activité ou un thème donné, et présentent des caractéristiques graphiques distinctives de celles des icônes d'accès direct. L'utilisateur est ainsi averti sur la nature de l'étape qui suivra sa sélection. S'il s'agit d'une icône de forme « icône d'accès direct », la prochaine étape sera une étape d'émission d'adresse à destination d'un site Web. A l'inverse, s'il s'agit d'une icône de forme « icône de sélection », la prochaine étape sera une nouvelle étape de sélection dans une page de sélection.

On peut avantageusement prévoir que le procédé d'accès selon l'invention comprenne en outre une mise à jour de la pluralité de pages de sélection stockées localement. Cette mise à jour peut être réalisée par téléchargement à partir d'un serveur de gestion programmé pour réaliser cette opération sur un ensemble de dispositifs ou terminaux d'accès mettant en oeuvre ce procédé.

De plus, il est particulièrement avantageux de prévoir dans la page d'accueil des icônes de sélection d'une langue de consultation parmi un ensemble de langues proposées, par exemple sous la forme de drapeaux d'Etats dans lesquels chaque langue proposée est pratiquée. Pour cela, on disposera de plusieurs ensembles préalablement stockés de pages de sélection correspondant chacun à une traduction dans une langue proposée. Cette fonctionnalité linguistique représente un autre avantage important du procédé selon la présente invention, puisqu'un utilisateur peut ainsi effectuer localement dans la langue de son choix une recherche préalable dans les différents thèmes, sous-thèmes ou sous-rubriques, alors que dans la situation classique d'une recherche directe sur le Web, ce même utilisateur se trouverait inévitablement confronté à un moment ou un autre à la barrière de la langue.

Suivant un autre aspect de l'invention, il est proposé un dispositif pour accéder à des sources d'information et à des services sur le Web, comprenant des moyens pour communiquer via un réseau de communication sur Internet, des moyens de contrôle et de traitement, des moyens de stockage de données, des moyens de visualisation, des moyens de saisie, et des moyens de pointage et de sélection, lesdits moyens de stockage contenant une pluralité de pages de sélection comprenant chacune un ensemble d'icônes.

Ce dispositif est **caractérisé en ce que,** pour chaque page de sélection, l'ensemble d'icônes comporte une ou plusieurs icônes d'accès direct à des sources distantes d'information et/ou une ou plusieurs icônes de sélection pour accéder localement à une autre page de sélection au sein de la ladite structure de menu en arborescence, et en ce que les moyens de contrôle et de traitement sont programmés pour :
- commander la visualisation par lesdits moyens de visualisation d'une page de sélection en réponse à une activation d'une icône de sélection prévue pour accéder localement à une autre page de sélection au sein de ladite structure de menu en arborescence, et
- émettre sur le réseau de communication, en réponse à une sélection d'une icône d'accès direct dans une page de sélection en cours de visualisation, une adresse de la source d'information correspondant à ladite icône d'accès direct sélectionnée,
   lesdites adresses de sources d'information correspondant à des icônes d'accès direct étant préalablement stockées localement dans une table ou base d'adresses ou générées localement au fur et à mesure des étapes de visualisation et de sélection.

Ce dispositif peut être réalisé à partir d'un ordinateur personnel, d'un poste de travail ou d'un terminal de réseau, ou bien être installé au sein d'un appareil dédié à des fonctions d'accès à des sources d'information et services sur le Web. Il peut s'agir par exemple d'une borne interactive Internet ou d'un appareil de bureautique et de communication installé soit dans une cabine publique en substitution d'un dispositif de téléphonie existant, soit dans des lieux ou espaces publics ou encore dans des lieux privés ou à usage professionnel.

D'autres particularités et avantages de l'invention apparaîtront encore dans la description ci-après. Aux dessins annexés donnés à titre d'exemples non limitatifs:
- la figure 1 est un schéma synoptique illustrant les étapes essentielles du procédé selon l'invention, et
- la figure 2 illustre le mécanisme d'accès par arborescence à l'adresse d'une information recherchée mis en oeuvre dans le procédé selon l'invention.

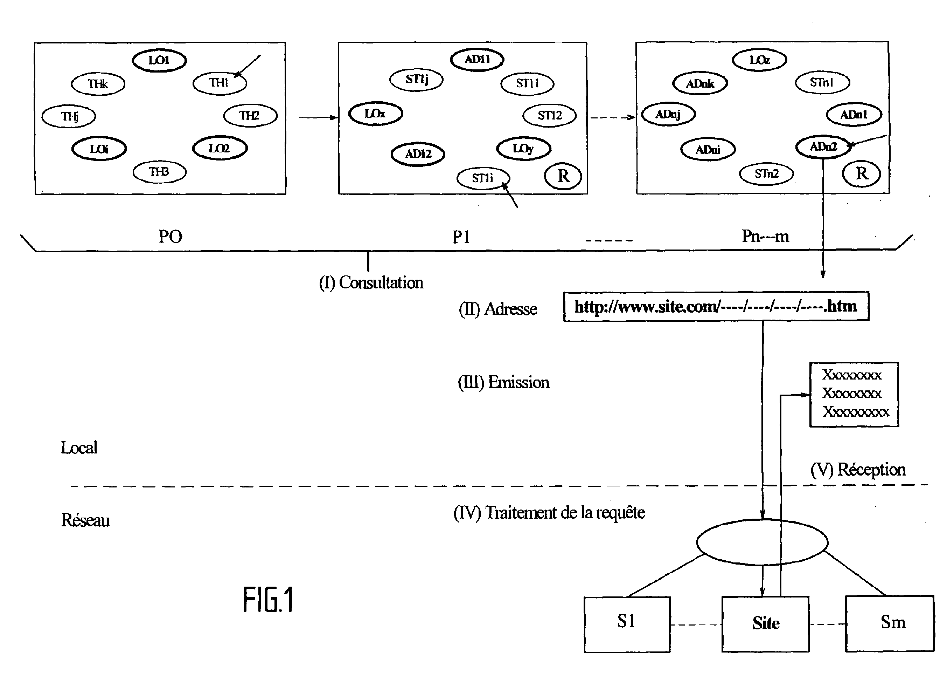

On va maintenant décrire, en référence à la figure 1, un exemple d'utilisation du procédé d'accès selon l'invention mis en oeuvre dans une borne Internet ou un appareil de communication et de bureautique.

Une première page Po, affichée lors de l'initialisation de l'appareil, contient par exemple :
- des icônes LO1, LO2,...,Loi représentant des logotypes, marques graphiques ou semi-graphiques, de sites marchands ou de portails d'entrée de grandes enseignes commerciales, par exemple une chaîne d'hôtels ou de restaurant ou une entreprise de grande distribution,
- des icônes TH1, TH2, TH3,...,THj, THk correspondant chacun à une rubrique ou à un thème d'intérêt général, par exemple le sport, la télévision, les prévisions météorologiques ou la bourse.

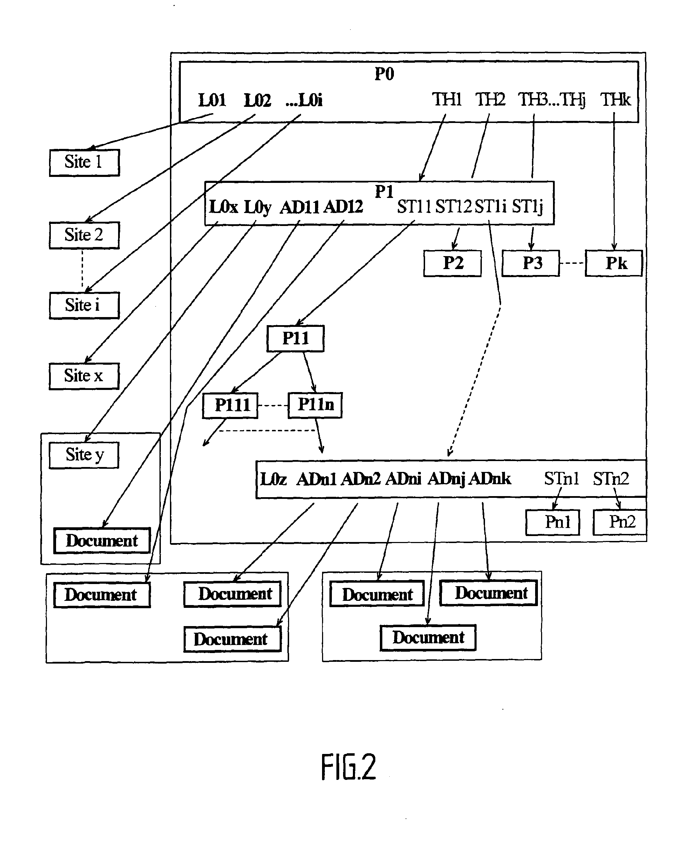

Cette première page P0 constitue le tronc d'une structure arborescente représentée schématiquement en figure 2 pour l'ensemble des pages-écrans stockées localement dans une unité de stockage, par exemple une unité de disque dur ou un CD-ROM, de l'appareil dans lequel ce procédé est mis en oeuvre.

Si l'utilisateur de l'appareil pointe sur l'icône du thème TH1, par exemple le thème SPORT, et clique sur cette icône, est alors affichée une page P1 dédiée au thème SPORT. Cette page P1 contient par exemple :
- une icône Lox d'accès à un site dédié à un ensemble de sports et une icône Loy d'accès à un site d'un grand club de football,
- une icône AD11 « Calendrier » d'accès direct à un calendrier hebdomadaire des événements sportifs fourni sur le site multisport précité,
- une icône AD12 « Matchs de 1^{ère} division » d'accès direct à un document de présentation des prochains matchs de la 1^{ère} division de football fourni par le site officiel de la fédération de football,
- des icônes ST11, ST12,..., ST1i,..., ST1j de sélection de sous-rubriques ou sous-thèmes, et
- une icône « Retour » permettant de revenir à la page initiale Po.

On considère par exemple que l'utilisateur de l'appareil de consultation dans lequel le procédé selon l'invention souhaite obtenir les coordonnées d'un club de supporters d'une grande équipe de basket-ball, avec l'intention d'acquérir un maillot aux couleurs de ce club et éventuellement de réserver des places pour la prochaine finale de championnat.

Cet utilisateur, après avoir sélectionné le thème TH1 « SPORT » dans la page P0, est naturellement conduit à sélectionner le sous-thème ST1i « SPORTS COLLECTIFS », puis, après un certain nombre de pages consultées, l'utilisateur atteint une page Pn-m dédiée au championnat de basket-ball. Cette page contient par exemple :
- une icône LOz d'accès au site officiel du championnat de basket-ball,
- une icône ADn1 d'accès direct au site d'une équipe rivale,
- une icône ADn2 d'accès direct au site du club de supporters de l'équipe recherchée,
- des icônes ADni, ADnj, ADnk d'accès direct à d'autres sources d'information liées au championnat de Basket-Ball, et
- des icônes STn1, STn2 correspondant à des sous-thèmes tels que « Formation » ou « Transferts ».

L'utilisateur sélectionne alors l'icône ADn2 « Club de supporters » et l'activation de cette icône a pour effet de générer (II) l'adresse complète de la page d'accueil de ce site, donnée à titre d'exemple non limitatif : http://site.com/--/--/--/--.htm

Cette adresse est alors émise (III) sur le Web via le réseau de communication auquel l'appareil est connecté, vers le site.concerné qui, en retour, envoie une page d'accueil qui est reçue (V) et visualisée par l'utilisateur qui va alors pouvoir consulter les informations recherchées et effectuer la commande souhaitée.

L'utilisateur a ainsi pu accéder sans difficulté à la source d'information recherchée avec une seule séquence requête-réponse, l'ensemble des opérations de sélection des thèmes et sous-thèmes ayant été réalisée localement au préalable grâce au procédé selon l'invention.

Il est à noter que les différentes pages consultées peuvent avantageusement inclure des icônes d'accès à un ou plusieurs moteurs de recherche pour permettre à l'utilisateur de reprendre à sa guise le contrôle de ses recherches sur le Web.

Chaque page de sélection peut également inclure des commandes usuelles de consultation telles que « PAGE ACCUEIL », « IMPRIMER », « PAGE PRECEDENTE », « PAGE SUIVANTE », « FIN SESSION », « AIDE ». De plus, notamment lorsque le procédé selon l'invention est mis en oeuvre dans un appareil de communication et de bureautique, on peut aussi prévoir des commandes de fonction bureautique ou de communication telles que « PHOTOCOPIE », « FAXER », « E-MAIL » ou « VISIO-CONFERENCE ».

Par ailleurs, il est aisé de concevoir un processus de téléchargement, périodique ou sur demande, d'une mise à jour d'un ensemble de pages utilisées dans le procédé selon l'invention, depuis un serveur de gestion vers un ensemble d'appareils de communication et de bureautique dans lequel ce procédé est mis en oeuvre.

Bien sûr, l'invention n'est pas limitée aux exemples qui viennent d'être décrits et de nombreux aménagements peuvent être apportés à ces exemples sans sortir du cadre de l'invention. Ainsi, les nombres de pages de sélection et d'icônes de sélection ou d'accès direct ne sont bien sûr pas limités aux exemples décrits. Il en est de même pour la forme et l'agencement de ces icônes qui peuvent être fixes ou dynamiques. Par ailleurs, le procédé selon l'invention peut être mis en oeuvre dans tout équipement fixe ou mobile permet d'accéder à des ressources sur Internet. En particulier, le procédé d'accès selon l'invention peut être mis en oeuvre dans des équipements de téléphonie mobile ou des agendas électroniques comportant une fonction d'accès à Internet.

## Revendications

1. **Equipement mobile** comportant une fonction d'accès à Internet via un réseau de communication, cet équipement comprenant des moyens pour communiquer via ce réseau de communication, des moyens de contrôle et de traitement, des moyens de stockage de données contenant une pluralité de pages de sélection organisées en une structure de menu en arborescence et comprenant chacune un ensemble d'icônes, des moyens de visualisation, des moyens de saisie, et des moyens de pointage et de sélection,
**caractérisé en ce que,** pour chaque page de sélection, l'ensemble d'icônes comporte (i) une ou plusieurs icônes d'accès direct à des sources distantes d'information ou à des services sur le Web et/ou (ii) une ou plusieurs icônes de sélection pour accéder localement à une autre page de sélection au sein ladite structure en arborescence, et **en ce que** les moyens de pointage et de sélection, les moyens de contrôle et de traitement et les moyens de communication coopèrent pour émettre sur ledit réseau de communication, en réponse à une sélection d'une icône d'accès direct, une adresse d'une source d'information distante correspondant à ladite icône sélectionnée .

2. **Equipement mobile** selon la revendication 1, **caractérisé en ce que** l'adresse d'une source d'information distante correspondant à une sélection d'une icône d'accès direct est préalablement stockée localement dans les moyens de stockage de données dudit équipement.

3. **Equipement mobile** selon la revendication 1, **caractérisé en ce que** l'adresse d'une source distante correspondant à une sélection d'une icône d'accès direct est générée localement au fur et à mesure d'étapes de visualisation et de sélection d'icônes au sein des pages de sélection.

4. **Equipement mobile** selon l'une quelconque des revendications précédentes,
**caractérisé en ce qu'**il est prévu pour recevoir un téléchargement d'une mise à jour d'un ensemble de pages de sélection depuis un serveur de gestion.

5. **Equipement de téléphonie mobile** comportant une fonction d'accès à Internet, selon l'une quelconque des revendications précédentes.

6. **Agenda électronique** comportant une fonction d'accès à Internet, selon l'une quelconque des revendications 1 à 4.

7. Procédé pour accéder à des sources d'information et à des services sur le Web à partir d'un **équipement mobile** connecté via un réseau de communication au réseau Internet, cet équipement mobile comprenant des moyens pour stocker localement un ensemble de pages de sélection organisées au sein d'une structure de menu en arborescence et contenant chacune un ensemble d'icônes,
**caractérisé en ce qu'**il comprend :
- un ensemble d'étapes préliminaires de sélection, comprenant des activations d'icônes de sélection prévues pour accéder localement depuis une page de sélection à une autre page de sélection au sein de ladite structure en arborescence, jusqu'à ce qu'à atteindre au sein d'une desdites pages de sélection une icône dite d'accès direct correspondant à une source d'information distante recherchée,
- une étape pour émettre finalement sur le réseau de communication, en réponse à une activation de ladite icône d'accès direct ainsi atteinte, une adresse complète d'accès à ladite source d'information distante recherchée.

8. Procédé selon la revendication 7, **caractérisé en ce qu'**il comprend en outre une mise à jour de l'ensemble de pages de sélection stockées localement dans **l'équipement mobile,** par téléchargement à partir d'un serveur de gestion connecté au réseau de communication.

9. Procédé selon la revendication 8, **caractérisé en ce que** le serveur de gestion est programmé pour réaliser un téléchargement de pages de sélection sur un ensemble **d'équipements mobiles** via le réseau de communication.

10. Procédé selon l'une des revendications 7 à 9, **caractérisé en ce qu'**au moins une page de sélection comprend une icône d'accès à un ou plusieurs moteurs de recherche sur le Web.
